(19) Europäisches Patentamt / European Patent Office / Office européen des brevets

(11) **EP 4 317 668 A1**

(12) **EUROPEAN PATENT APPLICATION**
published in accordance with Art. 153(4) EPC

(43) Date of publication:
**07.02.2024 Bulletin 2024/06**

(21) Application number: **22774695.5**

(22) Date of filing: **04.02.2022**

(51) International Patent Classification (IPC):
$F02D\ 19/08^{(2006.01)}$  $F02D\ 19/02^{(2006.01)}$
$F02D\ 19/06^{(2006.01)}$  $F02D\ 41/04^{(2006.01)}$
$F02D\ 41/38^{(2006.01)}$

(52) Cooperative Patent Classification (CPC):
**F02D 19/02; F02D 19/06; F02D 19/08; F02D 41/04; F02D 41/38;** Y02T 10/30

(86) International application number:
**PCT/JP2022/004373**

(87) International publication number:
**WO 2022/201894 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021 JP 2021047744**

(71) Applicant: **Yanmar Holdings Co., Ltd.**
**Osaka-shi, Osaka 530-8311 (JP)**

(72) Inventor: **DOUI, Masayoshi**
**Osaka-shi, Osaka 530-8311 (JP)**

(74) Representative: **Novagraaf International SA**
**Chemin de l'Echo 3**
**1213 Onex, Geneva (CH)**

(54) **ENGINE**

(57) An engine (1) according to the present invention is compatible with a gas mode in which gaseous fuel is mixed with air and combusted, a diesel mode in which liquid fuel is injected into a combustion chamber (2) and combusted with air, and a mixed combustion mode in which gaseous fuel and liquid fuel are mixed and combusted with air, speed being adjusted by feedback control of the amount of gaseous fuel injected during the mixed combustion mode.

*FIG. 3*

**Description**

TECHNICAL FIELD

The present invention relates to an engine capable of performing a gas mode, a diesel mode, and a mixed combustion mode.

BACKGROUND ART

There has been conventionally known a technique of, in an engine capable of performing a gas mode in which a gaseous fuel is mixed with air and a diesel mode in which a liquid fuel is combusted with air, reducing sulfur oxides (SOx) by performing mixed combustion, i.e., by simultaneously combusting the gaseous fuel and the liquid fuel (see, for example, Patent Document 1). There has also been conventionally used a mixed combustion technique of, in a case where a liquid fuel reaches an output limit, additionally supplying a gaseous fuel to increase an output (see, for example, Patent Document 2).

PRIOR ART DOCUMENT

PATENT DOCUMENT

Patent Document 1: JP-A-2018-188073

Patent Document 2: JP-A-2014-98338

SUMMARY OF INVENTION

TECHNICAL PROBLEM

However, in the conventional gas mode, properties and supply of a gaseous fuel are assumed to be stable in terms of engine control. Thus, when a gaseous fuel is newly injected into a gaseous fuel tank, the gaseous fuel contains a large amount of nitrogen, and properties thereof are unstable. Therefore, the engine cannot be stably operated. Further, when the remaining amount in the gaseous fuel tank decreases, a pressure of the gaseous fuel decreases, and supply thereof becomes unstable. Therefore, the engine cannot be stably operated.
The present invention has been made in view of such circumstances, and an object thereof is to provide an engine capable of performing stable control not only in a case where properties and supply of a gaseous fuel are stable, but also in a case where the properties and supply of the gaseous fuel are unstable.

SOLUTION TO PROBLEM

An engine according to one aspect of the present invention can perform a gas mode in which a gaseous fuel is mixed with air and is combusted, a diesel mode in which a liquid fuel is injected into a combustion chamber and is combusted with air, and a mixed combustion mode in which the gaseous fuel and the liquid fuel are mixed and combusted with air, in which an injection amount of the gaseous fuel is feedback-controlled in the mixed combustion mode to regulate a speed.
In the engine according to one aspect of the present invention, when the speed is not regulated by feedback-controlling the injection amount of the gaseous fuel in the mixed combustion mode, the speed may be regulated by feedback-controlling an injection amount of the liquid fuel.
In the engine according to one aspect of the present invention, a mixed combustion rate of the gaseous fuel and the liquid fuel may be calculated based on an output of a diesel governor, and operation of each unit may be controlled based on the mixed combustion rate.
The engine according to one aspect and another aspect of the present invention may include: a pilot fuel injection valve that injects a pilot fuel into the combustion chamber for the purpose of igniting the gaseous fuel; and air supply pressure adjusting means.
In the engine according to one aspect and another aspect of the present invention, the pilot fuel injection valve and the air supply pressure adjusting means may be controlled based on the calculated mixed combustion rate.
The engine according to one aspect and another aspect of the present invention may further include a control unit that switches between the gas mode, the diesel mode, and the mixed combustion mode and adjusts the mixed combustion rate.

In the engine according to one aspect and another aspect of the present invention, the control unit may switch to the diesel mode in a case where a speed regulation output is smaller than a predetermined threshold during operation in the mixed combustion mode.

In the engine according to one aspect and another aspect of the present invention, when it is determined that the heat generation amount of the gaseous fuel is larger than the heat generation amount of the liquid fuel, and the mixed combustion mode is switched to the gas mode, the output of the diesel governor may be maintained for a certain period of time after a switching command is issued.

ADVANTAGEOUS EFFECTS OF INVENTION

According to an engine of one aspect of the present invention, it is possible to provide an engine capable of performing stable control not only in a case where properties and supply of a gaseous fuel are stable, but also in a case where the properties and supply of the gaseous fuel are unstable.

BRIEF DESCRIPTION OF DRAWINGS

Fig. 1 is a schematic diagram illustrating a schematic configuration of an engine according to an embodiment of the present invention;
Fig. 2 is a block diagram illustrating a functional schematic configuration of an engine according to an embodiment of the present invention;
Fig. 3 is a graph showing speed regulation of an engine by feedback-controlling an injection amount of a gaseous fuel;
Fig. 4 is a graph showing speed regulation of an engine by feedback-controlling an injection amount of a liquid fuel;
Fig. 5 is a flowchart showing a flow of mixed combustion rate calculation processing;
Fig. 6 is a flowchart showing a flow of diesel mode switching processing;
Fig. 7 is a graph showing gas mode switching processing; and
Fig. 8 is a flowchart showing a flow of the gas mode switching processing.

DESCRIPTION OF EMBODIMENTS

Hereinafter, an engine according to an embodiment of the present invention will be described with reference to the drawings. Note that the engine according to the present embodiment is a so-called dual-fuel engine capable of using both a gaseous fuel and a liquid fuel as fuels.

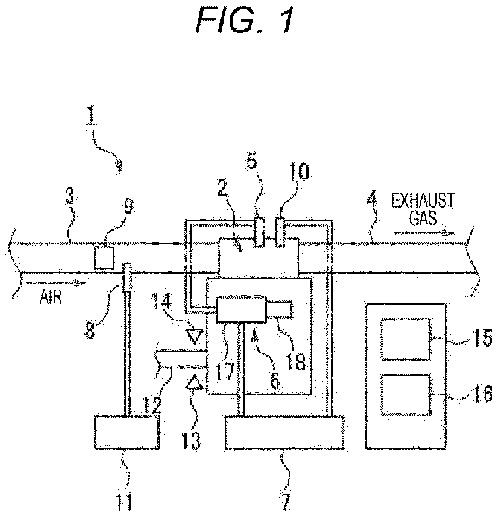

Hereinafter, a configuration of the engine according to the embodiment of the present invention will be described. Fig. 1 is a schematic diagram illustrating a schematic configuration of an engine 1 according to the embodiment of the present invention. The engine 1 includes a combustion chamber 2, an air supply pipe 3, an exhaust pipe 4, a main fuel injection valve 5, a diesel governor 6, a liquid fuel tank 7, a gas injector 8, air supply pressure adjusting means 9, a pilot fuel injection valve 10, a gaseous fuel tank 11, a crankshaft 12, a torque meter 13, a rotation speed sensor 14, an operation unit 15, and a control unit 16.

The air supply pipe 3 supplies air to the combustion chamber 2. The exhaust pipe 4 discharges exhaust gas from the combustion chamber 2. The crankshaft 12 is an output shaft of the engine 1 and is connected to a generator (not illustrated) or the like. The torque meter 13 is provided near the crankshaft 12 and detects a load of the engine 1. The rotation speed sensor 14 is provided near the crankshaft 12 and detects a rotation speed of the engine 1. The operation unit 15 is used by a user to operate each unit and includes a touchscreen or the like.

The main fuel injection valve 5 (corresponding to a "fuel injection valve" according to the present invention) mainly injects a liquid fuel into the combustion chamber 2. As illustrated in Fig. 1, the diesel governor 6 includes an injection pump 17 that supplies the liquid fuel to the main fuel injection valve 5 and a rack 18 capable of adjusting an amount of the liquid fuel supplied from the injection pump 17. The liquid fuel tank 7 stores the liquid fuel therein.

The gas injector 8 injects a gaseous fuel into the air supply pipe 3. The pilot fuel injection valve 10 performs pilot injection of a small amount of the liquid fuel into the combustion chamber 2 to ignite the gaseous fuel. The air supply pressure adjusting means 9 adjusts a flow rate of air to be mixed with the gaseous fuel. The gaseous fuel tank 11 stores the gaseous fuel therein.

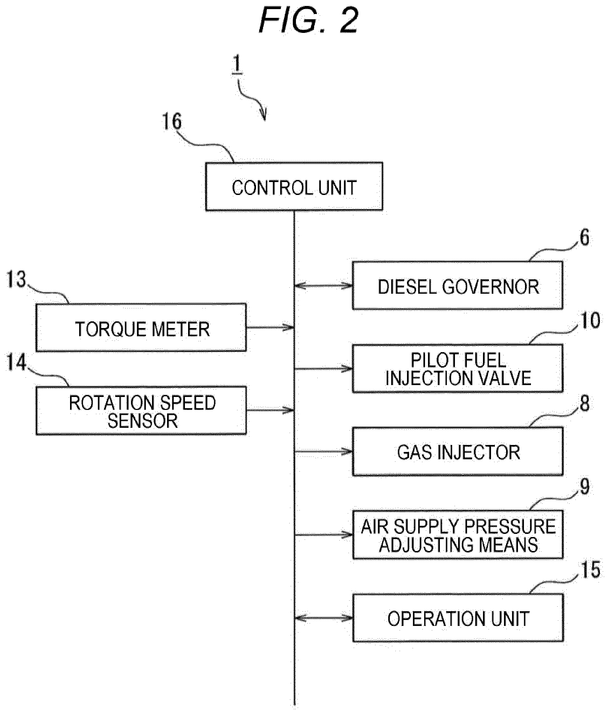

The control unit 16 controls operation of each unit of the engine 1. Fig. 2 is a block diagram illustrating a functional schematic configuration of the engine 1 according to the present embodiment. In the engine 1, operations of the diesel governor 6, the pilot fuel injection valve 10, the gas injector 8, the air supply pressure adjusting means 9, the operation unit 15, and the like are controlled by the control unit 16. Further, in the engine 1, an output value of the diesel governor 6, that is, a heat generation amount of the injected liquid fuel, a detection value of the torque meter 13, a detection value of the rotation speed sensor 14, various input values to the operation unit 15 by the user, and the like are output to the control unit 16.

The control unit 16 switches an operation mode of the engine 1. More specifically, the engine 1 can perform three operation modes: a gas mode, a diesel mode, and a mixed combustion mode. Here, the gas mode is an operation mode in which the gaseous fuel is mixed with air and is combusted. The diesel mode is an operation mode in which the main fuel injection valve 5 injects the liquid fuel into the combustion chamber 2 to combust the liquid fuel with air. The mixed combustion mode is an operation mode in which the gaseous fuel and the liquid fuel are mixed and combusted with air. The control unit 16 automatically switches the three operation modes in accordance with the load of the engine 1 or the like. Note that the operation mode can also be switched by the user via the operation unit 15.

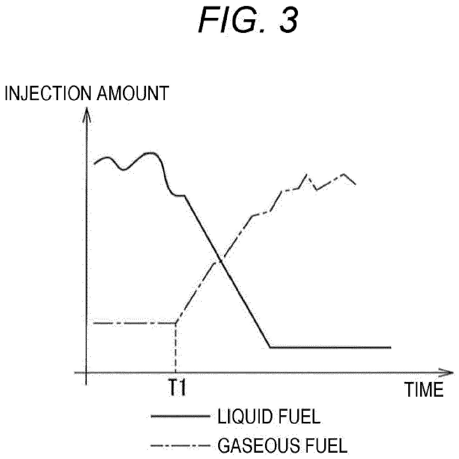

In a case where the engine 1 is operating in the mixed combustion mode, the control unit 16 performs feedback control, for example, PID control on an injection amount of either the gaseous fuel or the liquid fuel, thereby regulating the speed of the engine 1, that is, keeping the rotation speed thereof within a certain range. For example, in a case where the injection amount of the liquid fuel is relatively small, and the injection amount of the gaseous fuel is relatively large, the control unit 16 fixes the injection amount of the liquid fuel to a constant value or monotonically increases or monotonically decreases the injection amount of the liquid fuel and regulates the speed of the engine 1 by feedback-controlling the injection amount of the gaseous fuel. Fig. 3 is a graph showing speed regulation of the engine 1 by feedback-controlling the injection amount of the gaseous fuel. In Fig. 3, the horizontal axis represents the lapse of time, and the vertical axis represents the injection amount of the liquid fuel or the injection amount of the gaseous fuel. Before a time T1 in Fig. 3, the injection amount of the liquid fuel is relatively large, and the injection amount of the gaseous fuel is relatively small. At this time, the control unit 16 fixes the injection amount of the gaseous fuel to a constant value and regulates the speed of the engine 1 by feedback-controlling the injection amount of the liquid fuel. That is, the control unit 16 controls the operation of the rack 18 of the diesel governor 6 such that the rotation speed of the engine 1 matches with a target value.

Thereafter, at the time T1, the control unit 16 monotonically decreases the injection amount of the liquid fuel and then fixes the injection amount to a constant value that is set according to the engine load or the like. After the time T1, the control unit 16 switches to regulate the speed of the engine 1 by feedback-controlling the injection amount of the gaseous fuel. That is, the control unit 16 controls the operation of the gas injector 8 or the like such that the rotation speed of the engine 1 matches with the target value. Therefore, the injection amount of the gaseous fuel increases by a predetermined amount as the heat generation amount of the liquid fuel decreases as shown in Fig. 3. As described above, the speed of the engine 1 is regulated by using the gaseous fuel having a relatively large injection amount. This makes it possible to regulate the speed with high responsiveness and to inhibit the engine 1 from being uncontrollable.

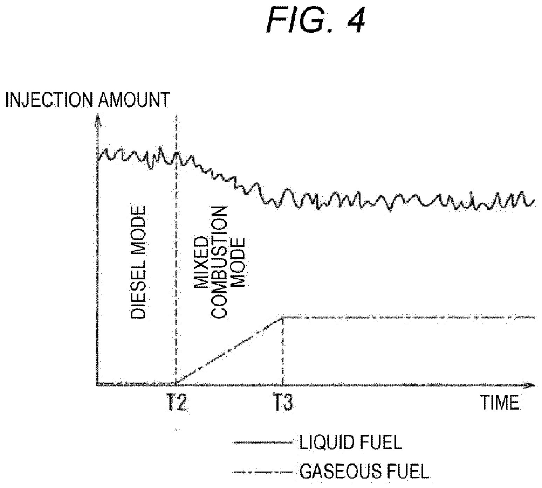

Meanwhile, in a case where the injection amount of the liquid fuel is relatively large, and the injection amount of the gaseous fuel is relatively small, the control unit 16 fixes the injection amount of the gaseous fuel to a constant value or monotonically increases or monotonically decreases the injection amount of the gaseous fuel and regulates the speed of the engine 1 by feedback-controlling the injection amount of the liquid fuel. Fig. 4 is a graph showing the speed regulation of the engine 1 by feedback-controlling the injection amount of the liquid fuel. As shown in Fig. 4, before a time T2, the injection amount of the gaseous fuel is zero, and the engine 1 is operated in the diesel mode. At this time, the control unit 16 regulates the speed of the engine 1 by feedback-controlling the injection amount of the liquid fuel. Thereafter, at the time T2, the control unit 16 switches the operation mode of the engine 1 from the diesel mode to the mixed combustion mode. That is, the control unit 16 monotonically increases the injection amount of the gaseous fuel and then, at a time T3, fixes the injection amount of the gaseous fuel to a constant value that is set according to the engine load or the like. Even after switching to the mixed combustion mode, the control unit 16 continuously regulates the speed of the engine 1 by feedback-controlling the injection amount of the liquid fuel having a relatively large injection amount. In this case, the injection amount of the liquid fuel decreases by a predetermined amount as the heat generation amount of the gaseous fuel is more available.

As described above, the speed of the engine 1 is regulated by feedback-controlling the injection amount of the liquid fuel in the mixed combustion mode, which makes it possible to stably control the engine 1. More specifically, when a gaseous fuel is newly injected into the gaseous fuel tank 11 of Fig. 1, the gaseous fuel contains a large amount of nitrogen, and properties of the gaseous fuel are unstable. Further, when the remaining amount of the gaseous fuel in the gaseous fuel tank 11 decreases, the pressure of the gaseous fuel decreases, and the supply thereof becomes unstable. In such a case, the speed of the engine 1 is regulated by using the liquid fuel having a relatively large injection amount, instead of the gaseous fuel having unstable properties and supply. This makes it possible to regulate the speed with high responsiveness and to inhibit the engine 1 from being uncontrollable.

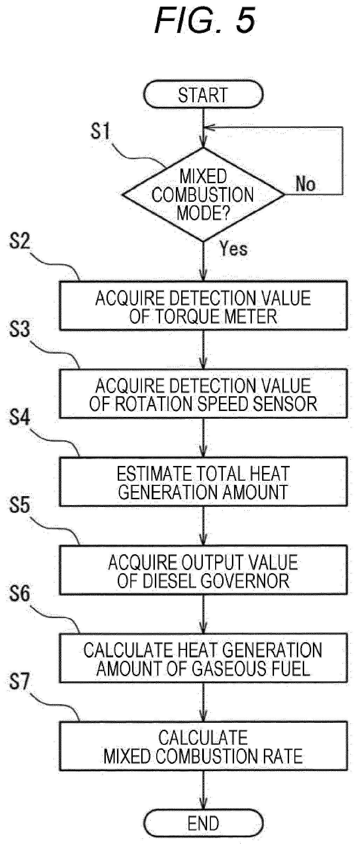

In a case where the engine 1 is operating in the mixed combustion mode, the control unit 16 performs mixed combustion rate calculation processing for the purpose of controlling the operation of each unit. Fig. 5 is a flowchart showing a flow of the mixed combustion rate calculation processing. First, the control unit 16 determines whether or not the engine 1 is operating in the mixed combustion mode (S1). As a result, when it is determined that the engine is not operating in the mixed combustion mode (S1: No), the control unit 16 returns to S1 and repeats the determination. Meanwhile, when it is determined in S1 that the engine 1 is operating in the mixed combustion mode (S1: Yes), the control unit 16 acquires the detection value of the torque meter 13 in Figs. 1 and 2, that is, the load of the engine 1 (S2). Next, the control unit 16 acquires the detection value of the rotation speed sensor 14, that is, the rotation speed of the engine 1 (S3). Then, the control unit 16 estimates a total heat generation amount of the engine 1 based on the acquired load and rotation speed of the engine 1 (S4). The control unit 16 further acquires the output value of the diesel governor 6, that is, the heat generation amount of the liquid fuel (S5). Then, the control unit 16 calculates the heat generation amount of the gaseous fuel by the following Equation (1) (S6). Finally, the control unit 16 calculates a mixed combustion rate by the following Equation (2) (S7). The order of the processing from S2 to S5 can be appropriately changed. The total heat generation amount of the engine 1 may be acquired from an output value of the generator (not illustrated) connected to the crankshaft 12 of Fig. 1, instead of being estimated from the load and rotation speed of the engine 1.

$$\text{Heat generation amount of gaseous fuel} = \text{Total heat generation amount - Heat generation amount of liquid fuel} \quad ..... \quad \text{Equation (1)}$$

$$\text{Mixed combustion rate} = \text{Heat generation amount of gaseous fuel/Total heat generation amount} \quad .......... \quad \text{Equation (2)}$$

Then, the control unit 16 controls the operations of the pilot fuel injection valve 10 and the air supply pressure adjusting means 9 in Figs. 1 and 2 based on the calculated mixed combustion rate. Specifically, the control unit 16 adjusts the injection amount per injection, an injection timing, the number of inj ections, and the like of the pilot fuel injection valve 10 to optimal values according to the mixed combustion rate. Further, the control unit 16 adjusts an air supply pressure of the air supply pressure adjusting means 9 to an optimal value according to the mixed combustion rate, thereby optimizing the flow rate of air to be mixed with the gaseous fuel. The control unit 16 performs such calculation of the mixed combustion rate and optimization of the operation of each unit according to the calculation at predetermined time intervals. This makes it possible to stably operate the engine 1. Further, in order to calculate the mixed combustion rate, the control unit 16 uses the output value of the diesel governor 6 which is relatively stable, that is, the heat generation amount of the liquid fuel, instead of using the heat generation amount of the gaseous fuel whose properties and supply tend to be unstable as described above. This makes it possible to calculate the mixed combustion rate more accurately and also to ignite the gaseous fuel more reliably based on the calculation.

The control unit 16 can automatically adjust the mixed combustion rate by adjusting the injection amount of the gas injector 8 or the like in accordance with the load of the engine 1 or the like. The mixed combustion rate can also be adjusted by the user via the operation unit 15.

While the engine 1 is operating in the mixed combustion mode, the control unit 16 performs diesel mode switching processing for the purpose of stable speed regulation control. More specifically, when the properties and supply of the gaseous fuel are unstable, and the heat generation amount thereof is also unstable as described above, if the injection amount of the gaseous fuel increases, whereas the injection amount of the liquid fuel decreases, the speed of the engine 1 operating with a large amount of unstable gaseous fuel cannot be stably regulated by using a small amount of the liquid fuel. Therefore, the control unit 16 determines in advance a threshold A of the output value of the diesel governor 6 that can control the speed regulation by using the liquid fuel. Then, in a case where the output value of the diesel governor 6 is smaller than the threshold A, the control unit 16 switches the operation mode of the engine 1 from the mixed combustion mode to the diesel mode.

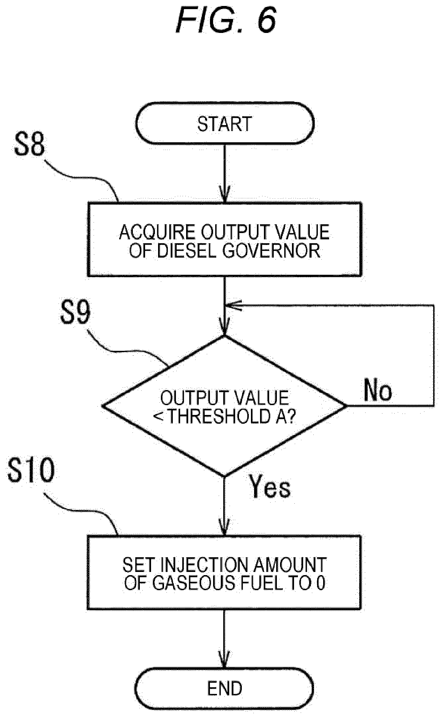

Fig. 6 is a flowchart showing a flow of the diesel mode switching processing. First, the control unit 16 acquires the output value of the diesel governor 6 (S8). Next, the control unit 16 determines whether or not the acquired output value of the diesel governor 6 is smaller than the predetermined threshold A (S9). As a result, when it is determined that the output value of the diesel governor 6 is equal to or larger than the threshold A (S9: No), the control unit 16 returns to S8 and performs the determination in S9 again on the reacquired output value of the diesel governor 6. Meanwhile, when it is determined in S9 that the output value of the diesel governor 6 is smaller than the threshold A (S9: Yes), the control unit 16 sets the injection amount of the gaseous fuel to zero (S10), that is, switches the operation mode of the engine 1 to the diesel mode. Therefore, the injection amount of the liquid fuel increases thereafter, and the speed regulation control is performed based on the injection amount of the liquid fuel. This makes it possible to stably operate the engine 1.

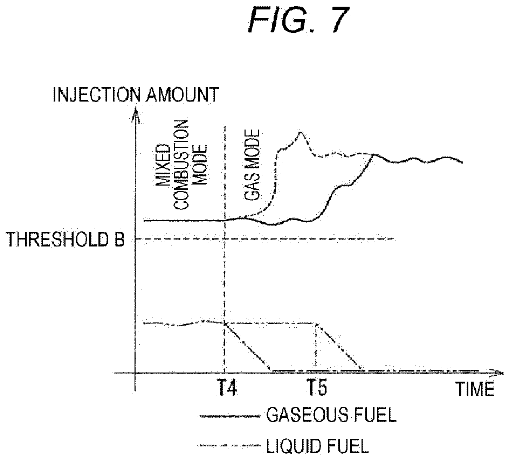

While the engine 1 is operating in the mixed combustion mode, the control unit 16 performs gas mode switching processing in response to a command from the user, the engine load, or the like. Fig. 7 is a graph showing the gas mode switching processing. As shown in Fig. 7, before a time T4, the control unit 16 fixes the injection amount of the gaseous fuel to a constant amount and regulates the speed of the engine 1 by feedback-controlling the injection amount of the liquid fuel. At this time, the injection amount of the gaseous fuel is larger than a predetermined threshold B, that is, the injection amount of the gaseous fuel is large, and the injection amount of the liquid fuel is small. In this state, when receiving a command to switch to the gas mode at the time T4, the control unit 16 generally decreases the injection amount of the liquid fuel to zero as indicated by an alternate long and short dash line in Fig. 7 and starts the speed regulation of the engine 1 by feedback-controlling the injection amount of the gaseous fuel. In that case, as indicated by a broken line in Fig. 7, the injection amount of the gaseous fuel generally increases significantly with a decrease in the heat generation amount of the liquid fuel.

However, the speed regulation of the engine 1 using the gaseous fuel is generally performed along with adjustment of a flow rate of the gaseous fuel and adjustment of the flow rate and pressure of air and thus tends to have poor responsiveness and be delayed, as compared with the speed regulation of the engine 1 using the liquid fuel. Therefore, as indicated by a solid line in Fig. 7, the injection amount of the gaseous fuel does not significantly increase after the time T4 and remains for a while. Because of this, the responsiveness of the speed regulation control using the injection amount of the gaseous fuel may decrease, and the engine 1 may fall into a dangerous state such as overrun. Therefore, as indicated by a dot-dot-dash line in Fig. 7, the control unit 16 fixes the injection amount of the liquid fuel to a constant value even after the time T4. Then, at a time T5 when a predetermined time has elapsed from the time T4, and the speed regulation control using the injection amount of the gaseous fuel is stabilized, the control unit 16 decreases the injection amount of the liquid fuel to zero. This makes it possible to stably operate the engine 1.

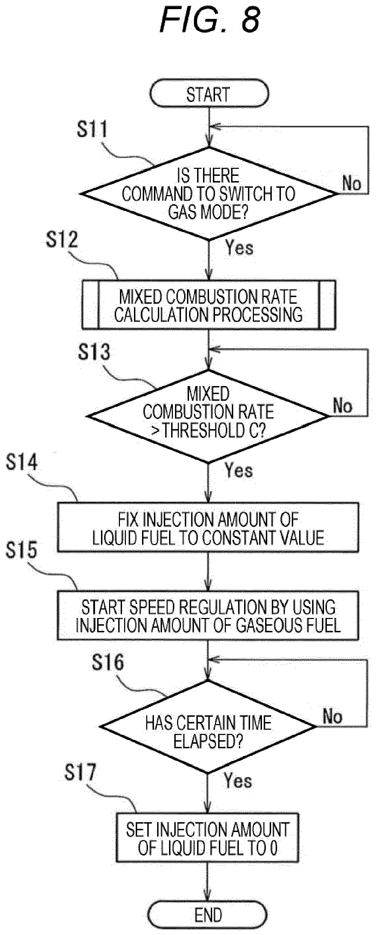

Fig. 8 is a flowchart showing a flow of the gas mode switching processing. First, the control unit 16 determines whether or not there is a command to switch to the gas mode (S11). As a result, when it is determined that there is no switching command (S11: No), the control unit 16 returns to S11 and waits until a switching command is issued. Meanwhile, when it is determined that there is a switching command in S11 (S11: Yes), the control unit 16 performs the above mixed combustion rate calculation processing (S12). Then, the control unit 16 determines whether or not the calculated mixed combustion rate is larger than a predetermined threshold C (S13). As a result, when it is determined that the mixed combustion rate is equal to or less than the threshold C (S13: No), the control unit 16 returns to S12 and performs the determination in S13 again on the recalculated mixed combustion rate.

Meanwhile, when it is determined that the mixed combustion rate is larger than the threshold C in S13 (S13: Yes), the control unit 16 fixes the injection amount of the liquid fuel to a constant value (S14) and starts the speed regulation of the engine 1 by feedback-controlling the injection amount of the gaseous fuel (S15). Next, the control unit 16 determines whether or not a predetermined time has elapsed from the start of the speed regulation in S15 (S16). As a result, when it is determined that the predetermined time has not elapsed yet (S16: No), the control unit 16 returns to S15 and waits until the predetermined time elapses. Meanwhile, when it is determined that the predetermined time has elapsed in S15 (S16: Yes), the control unit 16 sets the injection amount of the liquid fuel to zero (S17), that is, switches the operation mode of the engine 1 from the mixed combustion mode to the gas mode. Note that the order of the processing in S14 and S15 can be changed.

This application claims priority based on Japanese Patent Application No. 2021-047744 filed in Japan on March 22, 2021. The contents of this application are incorporated herein by reference in its entirety.

INDUSTRIAL APPLICABILITY

The present invention is particularly useful when a gaseous fuel is newly injected into the gaseous fuel tank 11 or when the remaining amount in the gaseous fuel tank 11 decreases.

LIST OF REFERENCE SIGNS

1    Engine
2    Combustion chamber
5    Main fuel injection valve
6    Diesel governor
9    Air supply pressure adjusting means
10   Pilot fuel injection valve
16   Control unit

**Claims**

1. An engine capable of performing a gas mode in which a gaseous fuel is mixed with air and is combusted, a diesel mode in which a liquid fuel is injected into a combustion chamber and is combusted with air, and a mixed combustion mode in which the gaseous fuel and the liquid fuel are mixed and combusted with air, wherein an injection amount of the gaseous fuel is feedback-controlled in the mixed combustion mode to regulate a speed.

2. The engine according to claim 1, wherein when the speed is not regulated by feedback-controlling the injection amount of the gaseous fuel in the mixed combustion mode, the speed is regulated by feedback-controlling an injection amount of the liquid fuel.

3. The engine according to claim 1 or 2, comprising:

   a fuel injection valve that injects the liquid fuel into the combustion chamber; and
   a diesel governor that adjusts the injection amount of the liquid fuel from the fuel injection valve,
   wherein a mixed combustion rate of the gaseous fuel and the liquid fuel is calculated based on an output of the diesel governor, and at least one of injection of the gaseous fuel or injection of the liquid fuel is controlled based on the mixed combustion rate.

4. The engine according to claim 3, further comprising:

   a pilot fuel injection valve that injects a pilot fuel into the combustion chamber for the purpose of igniting the gaseous fuel; and
   air supply pressure adjusting means.

5. The engine according to claim 4, wherein the pilot fuel injection valve and the air supply pressure adjusting means are controlled based on the calculated mixed combustion rate.

6. The engine according to any one of claims 3 to 5, further comprising a control unit that switches between the gas mode, the diesel mode, and the mixed combustion mode and adjusts the mixed combustion rate.

7. The engine according to claim 6, wherein the control unit switches to the diesel mode in a case where a speed regulation output is smaller than a predetermined threshold during operation in the mixed combustion mode.

8. The engine according to claim 5, wherein when it is determined that a heat generation amount of the gaseous fuel is larger than a heat generation amount of the liquid fuel, and the mixed combustion mode is switched to the gas mode, the output of the diesel governor is maintained for a certain period of time after a switching command is issued.

# FIG. 1

# FIG. 2

CONTROL UNIT 16

1

TORQUE METER 13

ROTATION SPEED SENSOR 14

DIESEL GOVERNOR 6

PILOT FUEL INJECTION VALVE 10

GAS INJECTOR 8

AIR SUPPLY PRESSURE ADJUSTING MEANS 9

OPERATION UNIT 15

# FIG. 3

# FIG. 4

# FIG. 5

START

S1 — MIXED COMBUSTION MODE? — No

Yes

S2 — ACQUIRE DETECTION VALUE OF TORQUE METER

S3 — ACQUIRE DETECTION VALUE OF ROTATION SPEED SENSOR

S4 — ESTIMATE TOTAL HEAT GENERATION AMOUNT

S5 — ACQUIRE OUTPUT VALUE OF DIESEL GOVERNOR

S6 — CALCULATE HEAT GENERATION AMOUNT OF GASEOUS FUEL

S7 — CALCULATE MIXED COMBUSTION RATE

END

# FIG. 6

S8

START

ACQUIRE OUTPUT VALUE
OF DIESEL GOVERNOR

S9

OUTPUT VALUE
< THRESHOLD A?    No

S10    Yes

SET INJECTION AMOUNT
OF GASEOUS FUEL TO 0

END

# FIG. 7

# FIG. 8

```
                    ┌─────────┐
                    │  START  │
                    └────┬────┘
                         │  ◄──────────────┐
S11                      ▼                 │
              ╱─────────────────────╲      │
             ╱    IS THERE            ╲  No │
            ╱  COMMAND TO SWITCH TO    ╲────┘
            ╲      GAS MODE?           ╱
             ╲─────────────────────────╱
                      │ Yes
S12                   ▼
        ┌─┬─────────────────────────┬─┐
        │ │  MIXED COMBUSTION RATE  │ │
        │ │  CALCULATION PROCESSING │ │
        └─┴─────────────────────────┴─┘
S13                   │  ◄──────────────┐
                      ▼                 │
              ╱─────────────────────╲   │
             ╱       MIXED           ╲  │
            ╱   COMBUSTION RATE    No  ╲─┘
            ╲    > THRESHOLD C?        ╱
             ╲─────────────────────────╱
                      │ Yes
S14                   ▼
        ┌─────────────────────────────┐
        │    FIX INJECTION AMOUNT OF   │
        │  LIQUID FUEL TO CONSTANT VALUE│
        └──────────────┬──────────────┘
S15                    ▼
        ┌─────────────────────────────┐
        │ START SPEED REGULATION BY USING│
        │ INJECTION AMOUNT OF GASEOUS FUEL│
        └──────────────┬──────────────┘
S16                    ▼  ◄─────────────┐
              ╱─────────────────────╲   │
             ╱   HAS CERTAIN TIME    ╲No│
            ╱      ELAPSED?           ╲─┘
            ╲─────────────────────────╱
                      │ Yes
S17                   ▼
        ┌─────────────────────────────┐
        │    SET INJECTION AMOUNT      │
        │    OF LIQUID FUEL TO 0       │
        └──────────────┬──────────────┘
                       ▼
                  ┌─────────┐
                  │   END   │
                  └─────────┘
```

15

## INTERNATIONAL SEARCH REPORT

| International application No. |
|---|
| **PCT/JP2022/004373** |

**A.    CLASSIFICATION OF SUBJECT MATTER**

*F02D 19/08*(2006.01)i; *F02D 19/02*(2006.01)i; *F02D 19/06*(2006.01)i; *F02D 41/04*(2006.01)i; *F02D 41/38*(2006.01)i
FI:    F02D19/08 C; F02D19/02 E; F02D19/06 B; F02D41/04; F02D41/38

According to International Patent Classification (IPC) or to both national classification and IPC

**B.    FIELDS SEARCHED**

Minimum documentation searched (classification system followed by classification symbols)

F02D19/08; F02D19/02; F02D19/06; F02D41/04; F02D41/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 62-58031 A (MITSUI ENG & SHIPBUILD CO LTD) 13 March 1987 (1987-03-13) p. 2, lower left column, line 4 to p. 12, lower left column, line 17, fig. 1-13 | 1-3, 6 |
| Y | | 4-5, 7-8 |
| Y | JP 2017-57775 A (YANMAR CO LTD) 23 March 2017 (2017-03-23) paragraphs [0044], [0050]-[0051], fig. 5-6 | 4-5, 7-8 |
| Y | US 2013/0220274 A1 (CUMMINS INTELLECTUAL PROPERTY,INC.) 29 August 2013 (2013-08-29) fig. 5 | 7 |
| Y | JP 9-209788 A (MAN B & W DIESEL AS) 12 August 1997 (1997-08-12) fig. 2 | 7 |
| Y | JP 2-207153 A (MITSUBISHI HEAVY IND LTD) 16 August 1990 (1990-08-16) fig. 2 | 7 |
| Y | JP 2013-241905 A (SUZUKI MOTOR CORP) 05 December 2013 (2013-12-05) paragraphs [0023]-[0025], fig. 4 | 8 |

☑ Further documents are listed in the continuation of Box C.      ☑ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **05 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004373**

| | C. | DOCUMENTS CONSIDERED TO BE RELEVANT |
|---|---|---|

| Category* | Citation of document, with indication, where appropriate, of the relevant passages | Relevant to claim No. |
|---|---|---|
| A | KR 10-2017-0038952 A (KOREA ELECTRIC POWER CORPORATION) 10 April 2017 (2017-04-10)<br>all figures and documents | 1-3, 6 |
| A | JP 2020-118054 A (ISUZU MOTORS LTD) 06 August 2020 (2020-08-06)<br>entire text, all drawings | 1 |
| A | WO 2019/049362 A1 (IHI POWER SYSTEMS CO LTD) 14 March 2019 (2019-03-14)<br>entire text, all drawings | 1 |

Form PCT/ISA/210 (second sheet) (January 2015)

**INTERNATIONAL SEARCH REPORT**
Information on patent family members

International application No.

**PCT/JP2022/004373**

| Patent document cited in search report | | | Publication date (day/month/year) | Patent family member(s) | | | Publication date (day/month/year) |
|---|---|---|---|---|---|---|---|
| JP | 62-58031 | A | 13 March 1987 | KR | 10-1986-0008364 | A | |
| JP | 2017-57775 | A | 23 March 2017 | US | 2019/0085773 | A1 | |
| | | | | paragraphs [0074], [0080]-[0081], fig. 5-6 | | | |
| | | | | WO | 2017/047162 | A1 | |
| | | | | EP | 3351778 | A1 | |
| | | | | EP | 3757374 | A1 | |
| | | | | KR | 10-2018-0034657 | A | |
| | | | | CN | 108026844 | A | |
| | | | | CN | 112855361 | A | |
| US | 2013/0220274 | A1 | 29 August 2013 | WO | 2011/153069 | A1 | |
| | | | | CN | 102918237 | A | |
| JP | 9-209788 | A | 12 August 1997 | US | 5711270 | A | |
| | | | | fig. 2 | | | |
| | | | | KR | 10-1997-0059476 | A | |
| JP | 2-207153 | A | 16 August 1990 | (Family: none) | | | |
| JP | 2013-241905 | A | 05 December 2013 | (Family: none) | | | |
| KR | 10-2017-0038952 | A | 10 April 2017 | (Family: none) | | | |
| JP | 2020-118054 | A | 06 August 2020 | (Family: none) | | | |
| WO | 2019/049362 | A1 | 14 March 2019 | CN | 111094726 | A | |

Form PCT/ISA/210 (patent family annex) (January 2015)

**EP 4 317 668 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018188073 A
- JP 2014098338 A
- JP 2021047744 A